# EUROPÄISCHE PATENTSCHRIFT

(11) **EP 0 447 635 B1**
(45) Veröffentlichungstag und Bekanntmachung des Hinweises auf die Patenterteilung: **13.03.1996**
(21) Anmeldenummer: 90123589.5
(22) Anmeldetag: 07.12.1990
(51) Int. Cl.: G06F 11/00

(54) **Verfahren zum Überprüfen von Sichtgerätesteuerungen auf Fehlerfreiheit in sicherungstechnischen Anlagen und Einrichtungen zum Durchführen dieses Verfahrens**
Method for verifying a display apparatus control for freedom of errors in protection related installations and device for carrying out this method
Procédé de vérification d'un appareil de commande d'affichage d'installations de sécurité pour absence d'erreur

(30) Priorität: 23.03.1990 DE 4009446
(43) Veröffentlichungstag der Anmeldung: 25.09.1991
(73) Patentinhaber: SIEMENS AKTIENGESELLSCHAFT, D-80333 München (DE)
(72) Erfinder: Forstreuter, Horst, Dipl.-Ing., W-3300 Braunschweig (DE); Hohlstein, Bernd, Dipl.-Ing., W-3304 Neubrück (DE)

(56) Entgegenhaltungen:
- EP-A- 0 052 433
- EP-A- 0 396 377
- US-A- 5 051 816

## Beschreibung

In der Eisenbahnsignaltechnik werden zur Steuerung des Bahnbetriebes in den Stellwerken und Betriebssteuerzentralen unter anderem auch Datensichtgeräte zur Darstellung des zu steuernden und zu überwachenden Prozeßgeschehens eingesetzt. Mindestens dann, wenn ein Bediener aus dem ihm über ein Datensichtgerät dargestellten Prozeßgeschehen steuernd auf den Prozeß einwirken soll, ist dafür Sorge tragen, daß das ihm dargestellte Prozeßgeschehen mit dem tatsächlichen Prozeßgeschehen übereinstimmt. Das gilt ganz besonders dann, wenn der Bediener auch sogenannte Hilfsbedienungen vorzunehmen hat, deren Zulässigkeit von keiner nachgeschalteten Automatik mehr überprüft wird, sondern voll in den Verantwortungsbereich des Bedieners fällt.

Ein bekanntes Verfahren zur sicheren Prozeßdarstellung sieht vor (Siemens-Zeitschrift 52 (1958) Heft 6, Seiten 347 bis 350), zur Steuerung eines Datensichtgerätes zwei Sichtgerätesteuerungen zu verwenden, welche die gleichen Eingangsdaten verarbeiten und diese Sichtgerätesteuerungen über eine Umschalteinrichtung im Wechsel auf das Datensichtgerät aufzuschalten. Solange die Sichtgerätesteuerungen einwandfrei arbeiten, werden auf dem angeschlossenen Datensichtgerät aufeinanderfolgend deckungsgleiche Bilder zur Darstellung gebracht; bei einem Defekt in einer der Sichtgerätesteuerungen liefert das Datensichtgerät im Wechsel unterschiedliche Darstellungen, was von einem Bediener mindestens dann, wenn er aufgrund des dargestellten Prozeßgeschehens steuernd in den Prozeß eingreifen will, erkannt wird. Beim Auftreten eines derartigen Defektes in der Sichtgerätesteuerung ist dem Bediener das Ausführen mindestens von Hilfsbedienungen untersagt.

Das bekannte Verfahren zur gesicherten graphischen Darstellung von Prozeßgeschehen baut auf der Mitwirkung eines Bedieners beim Erkennen fehlerhafter Darstellungen auf und damit auf seiner Leistungsfähigkeit und Leistungsbereitschaft. Das gleiche gilt hinsichtlich der Funktionsüberwachung des die beiden Sichtgerätesteuerungen im Wechsel auf das Datensichtgerät aufschaltenden Umschalters; auch diese Funktionsüberwachung erfolgt regelmäßig auf optischem Wege durch Überwachen von Kontrollzeichen auf der Monitordarstellung. Bleibt der Umschalter für die Sichtgerätesteuerungen in einer seiner beiden Schaltstellungen hängen, so wird das Datensichtgerät fortan aus nur einer Sichtgerätesteuerung versorgt, und die Darstellung ist nicht mehr als signaltechnisch sicher anzusehen. Wenn der Bediener bei einem derartigen Fehler die Anzeige für das Funktionsverhalten des Umschalters auf der Monitordarstellung nicht mit der nötigen Sorgfalt überwacht, ist der eingetretene Fehler allein aufgrund des übrigen ihm auf dem Sichtgerät dargestellten Prozeßgeschehens für ihn nicht erkennbar und er führt ggf. Bedienungshandlungen aus, die er bei der eingetretenen Störung gar nicht mehr ausführen darf, weil nicht sichergegestellt ist, daß das ihm vermittelte Prozeßgeschehen identisch ist mit dem tatsächlichen Prozeßgeschehen.

Aus der DE-PS 34 11 015 ist ein Verfahren zur signaltechnisch sicheren Bildschirmdarstellung eines Meldebildes bekannt, bei dem zur Prüfung der Richtigkeit des Meldebildes aus den dem Datensichtgerät zugeführten Bilddaten durch Datenreduktion ein Prüfcode gebildet wird und mit einem dem jeweils dargestellten Meldebild zugeordneten, in einem Vergleichsspeicher bereitgehaltenen Vergleichscode verglichen wird. Eine Fehleranzeige erfolgt, wenn Prüfcode und Vergleichscode voneinander abweichen. Dieses bekannte Verfahren und eine dieses Verfahren verwendende Einrichtung sind zwar unabhängig von der Mitwirkung eines Menschen bei der Fehleraufdeckung; überprüft wird aber nicht die komplette Sichtgerätesteuerung, sondern nur ein Teil davon, im wesentlichen der Bildspeicher, denn dessen Daten werden beim Auslesen der Datenreduktion unterzogen und mit einem Vergleichscode verglichen. Ob die Sichtgerätesteuerung bei der Umsetzung dieser Daten in Videosignale fehlerfrei arbeitet oder nicht, wird nicht geprüft.

Aufgabe der Erfindung ist es, ein Verfahren zum vollständigen Überprüfen von Sichtgerätesteuerungen auf Fehlerfreiheit in sicherungstechnischen Anlagen sowie Einrichtungen zur Durchführung dieses Verfahrens anzugeben, die unabhängig sind von der Mitwirkung des Menschen an der Fehleraufdeckung.

Das erfindungsgemäße Verfahren löst diese Aufgabe durch die kennzeichnenden Merkmale des Patentanspruches 1. Einrichtungen zur Durchführung des Verfahrens sind in den Ansprüchen 4 und 6 angegeben; vorteilhafte Ausbildungen des Verfahrens und der erfindungsgemäßen Einrichtungen sind in den Unteransprüchen gekennzeichnet.

Ausführungsbeispiele der Erfindung sind nachstehend anhand der Zeichnung näher erläutert.

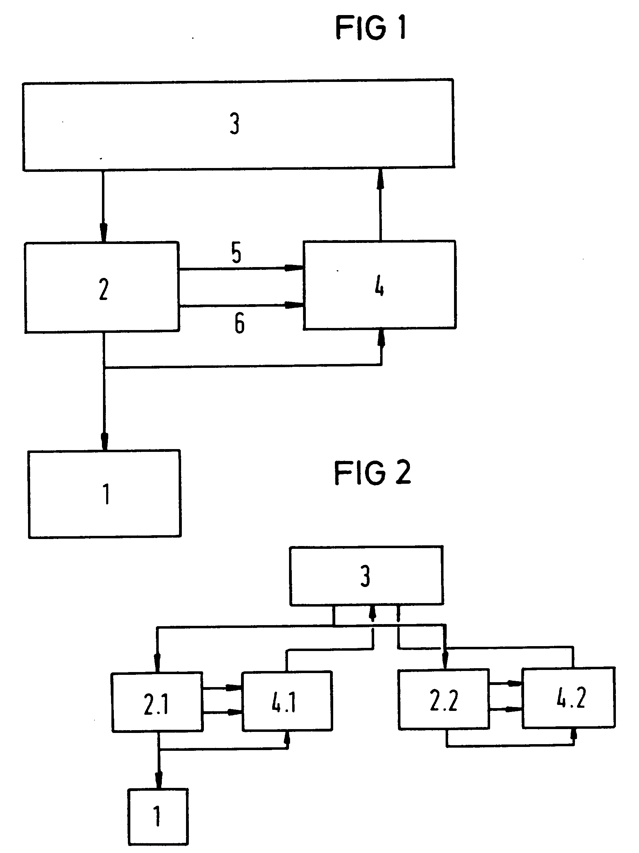

Die Zeichung zeigt in Fig. 1 eine gemäß Anspruch 4 und in Fig. 2 eine gemäß Anspruch 6 ausgebildete Einrichtung zur Durchführung des erfindungsgemäßen Verfahrens; für einander entsprechende Bauelemente wurden in den Figuren einander entsprechende Bezugszeichen verwendet.

Fig. 1 zeigt einen Monitor 1, der von einer Sichtgerätesteuerung 2 betrieben wird. Die Sichtgerätesteuerung 2 ist eingangsseitig an einen sicherungstechnischen Rechner 3, z.B. das Doppelrechnersystem SIMIS, angeschlossen und wird von dort her mit Daten zur Darstellung des Prozeßgeschehens versorgt. Die am Ausgang der Sichtgerätesteuerung 2 ausgegebenen Videosignale gelangen außer auf den Monitor 1 auch auf den Zähleingang einer Zählschaltung 4. Diese Zählschaltung 4 dient dazu, bei Aktivierung durch den sicherungstechnischen Rechner oder die Sichtgerätesteuerung die Anzahl der Videosignalwechsel bei ausgewählten Monitorbildern auszuzählen. Hierzu erhält die Zählschaltung 4 über eine Verbindungsleitung 5 z.B. von der Sichtgerätesteuerung 2 einen entsprechenden Zählanstoß und über eine Verbindungsleitung 6 eine Information über die zeitliche Dauer des Zählvorganges. Der Zählanstoß wird gegeben, wenn der sicherungstechnische Rechner oder die Sichtgerätesteuerung die Daten für die Darstellung des oder der ausgewählten Bilder bereitstellt; die Information über die zeitliche Dauer des Auszählvorganges wird durch den zeitlichen Abstand zwischen zwei vorzugsweise aufeinanderfolgenden Bildsynchronisierimpulsen für die Monitordarstellung vorgegeben. Die Zählschaltung 4 kann z.B. aus einer Anzahl von Zählern zum getrennten Auszählen der dem Monitor 1 zur Verfügung gestellten RGB-Signale bestehen. Die Zählkapazität dieser Zähler richtet sich nach dem Auflösevermögen des Monitors 1 und dem Inhalt des jeweils auszuzählenden Bildes. Wird z.B. bei einer Bildauflösung von 640 mal 350 Pixel bei einem bestimmten Bild jeder zweite Pixel in jeder Fernsehzeile hell getaktet, so ist dafür die maximale Zählsumme 640 : 2 x 350 = 112000; zum Speichern dieser Zählsumme reicht ein dualer Zähler mit 17 Bits aus.

Das von der Zählschaltung 4 ermittelte Zählergebnis wird in einem Puffer zwischengespeichert und dem sicherungstechnischen Rechner 3 auf dessen Anforderung zur Verfügung gestellt. Dieser vergleicht das ihm übermittelte Zählergebnis mit einer ihm bekannten, für das jeweils ausgezählte Bild festgelegten oder von ihm selbst aus diesem oder für dieses Bild ermittelten Soll-Zählsumme und veranlaßt bei einer unzulässigen Abweichung von einem oder mehreren Pixel die Ausgabe eines Fehlersignals. Dieses Fehlersignal kann in einer aktiven Fehlermeldung bestehen oder darin, daß die Ausgabe einer das ordnungsgerechte Betriebsverhalten der Sichtgerätesteuerung kennzeichnenden Statusmeldung unterdrückt wird. Dieses Fehlersignal kann dazu verwendet werden, über den sicherungstechnischen Rechner 3 die weitere Verwertung der von der Sichtgerätesteuerung generierbaren Bilder mindestens für sicherungstechnische Anwendungen zu sperren, das heißt, das Ausführen von Hilfsbedienungen zu sperren, bis der aufgetretene Fehler behoben ist.

Die Überprüfung der Funktionsfähigkeit der Sichtgerätesteuerung 2 muß innerhalb vorgegebener maximaler Zeitabstände veranlaßt werden, die durch die zulässige Fehlerausfalloffenbarungszeit für das Sichtgerät bestimmt ist. Während jedes Prüfvorganges sind mindestens ein, vorzugsweise aber mehrere ausgewählte Bilder mit unterschiedlichem Bildinhalt durch die Zählschaltung zu analysieren. Diese Bilder können fest vorgegebene Testbilder sein, die für die einzelnen Pixel der Sichtgerätedarstellung aufeinanderfolgend unterschiedliche Farb- und ggf. Intensitätswerte vorgeben. Als ausgewählte Bilder können jedoch auch die darzustellenden Prozeßbilder selbst verwendet werden. Bei Verwendung dieser Bilder für die Funktionsüberprüfung der Sichtgerätesteuerung ist der zeitliche Abstand zwischen aufeinanderfolgenden Prüfvorgängen zu verkürzen, weil bei den einzelnen Prüfvorgängen nur jeweils ein Bruchteil des möglichen Darstellungsumfanges der Sichtgerätesteuerung überprüft wird.

Bietet die Sichtgerätesteuerung die Möglichkeit, die einzelnen Pixel der Monitordarstellung mit unterschiedlichen Intensitäten zu steuern, so ist die Zählschaltung mit einer entsprechend vervielfachten Anzahl von Zählern zum Erkennen der Videosignalwechsel bei unterschiedlichen Intensitätswerten des Videosignals zu versehen. Erfolgt die Steuerung des Monitors 1 mit analogen RGB-Signalen, so sind dem Zähleingang der Zählschaltung 4 Umsetzer zum Umsetzen dieser Signale auf Digitalpegel vorzuschalten.

Werden die Daten für die auszuzählenden Testbilder nicht vom sicherungstechnischen Rechner jedesmal neu der Sichtgerätesteuerung übermittelt, sondern sind diese Daten in der Sichtgerätesteuerung selbst abgelegt, so ist dafür zu sorgen, daß diese Daten innerhalb vorgegebener maximaler Zeitspannen zu Kontrollzwecken in den sicherungstechnischen Rechner zurückgelesen werden. Hierdurch soll erreicht werden, daß etwaige Datenverfälschungen in den Speichern der Sichtgerätesteuerung, die im Zusammenwirken mit bestimmten Fehlfunktionen der Sichtgerätesteuerung nicht zwingend zu Abweichungen zwischen Soll- und Ist-Zählsummen beim Auszählen von Videosignalwechseln führen müssen, möglichst frühzeitig erkannt und unwirksam gemacht werden können.

Wenn die Sichtgerätesteuerung durch eine intelligente hardware wie z.B. einen Personal-Computer dargestellt ist, besteht die Möglichkeit, einen Teil der Sichtgerätesteuerung, nämlich den Bildspeicher, dadurch zu überprüfen, daß die Sichtgerätesteuerung für bestimmte Bildspeicherinhalte Sicherungsinformationen nach einem zyklischen Code bildet und die dabei ermittelten CRC-Summen (cycle redundancy check character) dem sicherungstechnischen Rechner auf dessen Anforderung zur Verfügung stellt. Der sicherungstechnische Rechner bildet für das bzw. die in den Bildspeicher geladenen Bilder nach den gleichen Gesetzmäßigkeiten CRC-Summen und vergleicht sie mit den für diese Bilder gebildeten CRC-Summen der Sichtgerätesteuerung auf Übereinstimmung. Weichen die für die gleichen Bilder vom sicherungstechnischen Rechner und von der Sichtgerätesteuerung ermittelten CRC-Summen voneinander ab, so veranlaßt der sicherungstechnische Rechner das Setzen des Fehlersignals.

Zur vollständigen Funktionsprüfung der Sichtgerätesteuerung ist neben der Funktionsprüfung des Bildspeichers auch die Funktionsprüfung der Sichtgerätesteuerung beim Bildaufbau erforderlich. Dies wird durch Auszählen der Videosignalwechsel ausgewählter Bilder vorgenommen, wobei insgesamt weniger Testbilder auszuzählen sind, als wenn zusätzlich auch der Bildspeicher auf die gleiche Weise überprüft wird.

Figur 2 zeigt eine Ausführungsform der Erfindung, bei der anstelle nur einer Sichtgerätesteuerung zwei derartige Steuerungen 2.1 und 2.2 vorgesehen sind. Die beiden Sichtgerätesteuerungen werden vom sicherungstechnischen Rechner 3 mit inhaltlich übereinstimmenden Daten zur Darstellung eines Prozeßgeschehens versorgt. Nur einer der beiden Sichtgerätesteuerungen wirkt jedoch tatsächlich auf einen Monitor 1 ein. Beiden Sichtgerätesteuerung ist eine eigene Zählschaltung 4.1 bzw. 4.2 zum Auszählen der Videosignalwechsel zugeordnet. Das Auszählen der Videosignalwechsel erfolgt wie bei dem Ausführungsbeispiel der Figur 1 nach dem Bereitstellen der hierfür vorgesehenen Bilder durch die Sichtgerätesteuerungen. Beide Zählschaltungen melden die von ihnen ermittelten Zählergebnisse an den sicherungstechnischen Rechner 3, der diese auf Übereinstimmung prüft und bei einer unzulässigen Abweichung das Fehlersignal ausgibt. Bei dieser Ausführungsform der Erfindung kommt es auf den absoluten Wert der beiden Zählergebnisse nicht an, sondern nur auf ihre Übereinstimmung.

Auch bei Verwendung von redundanten Sichtgerätesteuerungen ist es bei geeigneter Ausbildung dieser Sichtgerätesteuerungen möglich und von Vorteil, wenn beide Sichtgerätesteuerungen für einander entsprechende Bildinhalte ihrer Bildspeicher Sicherungsinformationen bilden und die dabei ermittelten CRC-Summen dem sicherungstechnischen Rechner zu Vergleichszwecken zur Verfügung stellen. Zusätzlich ist eine Funktionsprüfung der Sichtgerätesteuerungen beim Bildaufbau durch Auszählen von Videosignalwechseln durchzuführen.

Durch die Anwendung des erfindungsgemäßen Verfahrens ist es möglich, eine von der Sorgfaltspflicht eines Beobachters unabhängige Funktionsprüfung einer für die Prozeßdarstellung verwendeten Sichtgerätesteuerung vorzunehmen, die für den Prüfvorgang mit einem Minimum an Hard- und Software auskommt, für die Hardware wenige, hochzuverlässige Bauelemente benötigt und damit insgesamt außerordnetlich zuverlässig ist.

## Patentansprüche

1. Verfahren zum Überprüfen von Sichtgerätesteuerungen auf Fehlerfreiheit in sicherungstechnischen Anlagen, **dadurch gekennzeichnet ,** daß in von den Sichtgerätesteuerungen generierten Bildern die Anzahl der zwischen jeweils zwei Bildsynchronisierimpulsen auftretenden Videosignalwechsel gezählt und die Zählergebnisse mit für diese Bilder bekannten oder aus diesen Bildern abgeleiteten Videosignalwechsel-Zählsummen verglichen werden, wobei bei einer unzulässigen Abweichung ein Fehlersignal gesetzt wird.

2. Verfahren nach Anspruch 1, **dadurch gekennzeichnet,** daß die Zählvorgänge innerhalb vorgegebener maximaler Zeitabstände veranlaßt werden.

3. Verfahren nach Anspruch 1 und 2, **dadurch gekennzeichnet**, daß beim Setzen des Fehlersignals die weitere Verwertung der von den Sichtgerätesteuerungen generierbaren Bilder mindestens für sicherungstechnische Anwendungen gesperrt wird.

4. Einrichtung zur Durchführung des Verfahrens nach Anspruch 1 oder den Ansprüchen 1 bis 3, **dadurch gekennzeichnet**,
daß die Sichtgerätesteuerung eingangsseitig an einen sicherungstechnischen Rechner angeschlossen ist, der die Daten für die Bilder eines ausgangsseitig an die Sichtgerätesteuerung anzuschließenden Monitors bereitstellt,
daß eine vom sicherungstechnischen Rechner oder von der Sichtgerätesteuerung aktivierbare Zählschaltung zum Auszählen der Videosignalwechsel ausgewählter Bilder vorgesehen ist, die das von ihr ermittelte Zählergebnis dem sicherungstechnischen Rechner zum Vergleich mit einer Soll-Zählsumme zuführt und daß der sicherungstechnische Rechner beim Feststellen einer unzulässigen Abweichung das Fehlersignal setzt.

5. Einrichtung zur Durchführung des Verfahrens nach Anspruch 1 oder den Ansprüchen 1 bis 3, **dadurch gekennzeichnet,**
daß zwei Sichtgerätesteuerungen (2.1, 2.2) vorgesehen sind, die eingangsseitig an einen sicherungstechnischen Rechner (3) angeschlossen sind, der die Daten für die Bilder eines ausgangsseitig an mindestens eine Sichtgerätesteuerung (2.1) anzuschliessenden Monitors (1) bereitstellt,
daß zwei vom sicherungstechnischen Rechner oder von den Sichtgerätesteuerungen aktivierbare Zählschaltungen (4.1, 4.2) zum getrennten Auszählen der Videosignalwechsel in den Ausgangssignalen beider Sichtgerätesteuerungen vorgesehen sind, daß der sicherungstechnische Rechner die Zählergebnisse beider Zählschaltungen auf Übereinstimmung vergleicht und beim Feststellen einer unzulässigen Abweichung das Fehlersignal setzt.

6. Einrichtung nach Anspruch 4 oder 5, **dadurch gekennzeichnet,** daß der sicherungstechnische Rechner (3) der Sichtgerätesteuerung (2; 2.1, 2.2) die Daten für die Generierung mindestens eines ausgewählten Testbildes zuführt.

7. Einrichtung nach Anspruch 4 oder 5, **dadurch gekennzeichnet**, daß die Daten für die Generierung mindestens eines Testbildes in der Sichtgerätesteuerung (2; 2.1, 2.2) hinterlegt sind und daß der sicherungstechnische Rechner (3) die in der Sichtgerätesteuerung hinterlegten Daten innerhalb vorgegebener maximaler Zeitabstände zu Prüfzwecken zurückliest, mit den ihm bekannten Daten für dieses Testbild vergleicht und beim Feststellen einer unzulässigen Abweichung das Fehlersignal setzt.

8. Einrichtung nach Anspruch 4, 5 oder 6, **dadurch gekennzeichnet,** daß auf dem Monitor (1) dargestellte, einem zu steuernden und/oder zu überwachenden Prozeß zugeordnete aktuelle Prozeßbilder als Testbilder verwendet sind.

9. Einrichtung nach Anspruch 4 oder 5, **dadurch gekennzeichnet,** daß die Zählschaltung (4; 4.1, 4.2) aus einer Anzahl von Zählern zum getrennten Auszählen von RGB-Signalen und ggf. unterschiedlichen Intensitäten dieser Signale mit nachgeschaltetem Puffer zum Zwischenspeichern der ermittelten Zählsummen besteht.

10. Einrichtung nach Anspruch 9, **dadurch gekennzeichnet**, daß den Zählern Umsetzer zum Umsetzen analoger RGB-Signale auf Digitalpegel vorgeschaltet sind.

11. Einrichtung nach einem der Ansprüche 4 bis 8, **dadurch gekennzeichnet**, daß die Sichtgerätesteuerungen (2; 2.1, 2.2) als Personal-Computer mit zugehörigen Videokarten ausgebildet sind.

## Claims

1. Method for checking visual display unit controllers in safety installations for freedom from faults, characterized in that the number of video signal changes occurring between in each case two frame synchronization pulses are counted in images generated by the visual display unit controllers, and the count results are compared with video signal change count sums which are known for these images or are derived from these images, a fault signal being set in the event of an unacceptable discrepancy.

2. Method according to Claim 1, characterized in that the count processes are initiated within predetermined maximum time intervals.

3. Method according to Claims 1 and 2, characterized in that, when the fault signal is set, further processing of the images which can be generated by the visual display unit controllers is inhibited at least for safety applications.

4. Device for carrying out the method according to Claim 1 or Claims 1 to 3, characterized
in that the visual display unit controller is connected on the input side to a safety computer which prepares the data for the images of a monitor which can be connected to the visual display unit controller on the output side, in that a counting circuit, which can be activated by the safety computer or by the visual display unit controller, is provided for counting the video signal changes of selected images, which counting circuit supplies the count result determined by it to the safety computer for comparison with a nominal count sum, and in that the safety computer sets the fault signal if an unacceptable discrepancy is found.

5. Device for carrying out the method according to Claim 1 or Claims 1 to 3, characterized
in that two visual display unit controllers (2.1, 2.2) are provided, which are connected on the input side to a safety computer (3) which prepares the data for the images of a monitor (1) which can be connected to at least one visual display unit controller (2.1) on the output side,
in that two counting circuits (4,1, 4.2), which can be activated by the safety computer or by the visual display unit controllers, are provided for separate counting of the video signal changes in the output signals of both visual display unit controllers,
in that the safety computer compares the count results of both counting circuits for correspondence and sets the fault signal if an unacceptable discrepancy is found.

6. Device according to Claim 4 or 5, characterized in that the safety computer (3) supplies the data for the generation of at least one selected test image to the visual display unit controller (2; 2.1, 2.2).

7. Device according to Claim 4 or 5, characterized in that the data for the generation of at least one test image are stored in the visual display unit controller (2; 2.1, 2.2), and in that the safety computer (3) reads back the data stored in the visual display unit controller within predetermined maximum time intervals for test purposes, compares said data with the data known to it for this test image, and sets the fault signal if an unacceptable discrepancy is found.

8. Device according to Claim 4, 5 or 6, characterized in that current process images which are displayed on the monitor (1) and are assigned to a process to be controlled and/or to be monitored are used as test images.

9. Device according to Claim 4 or 5, characterized in that the counting circuit (4; 4.1, 4.2) comprises a number of counters for separate counting of RGB signals and, if required, different intensities of these signals, with a downstream buffer for buffer storage of the count sums determined.

10. Device according to Claim 9, characterized in that converters for conversion of analogue RGB signals to digital levels are connected upstream of the counters.

11. Device according to one of Claims 4 to 8, characterized in that the visual display unit controllers (2; 2.1, 2.2) are designed as personal computers with associated video cards.

## Revendications

1. Procédé de vérification de l'absence d'erreurs de commandes d'un appareil de visualisation dans des installations de sécurité, caractérisé en ce que l'on compte le nombre de changements de signaux vidéo apparaissant entre deux impulsions de synchronisation d'image dans des images générées par les commandes d'appareils de visualisation et on compare les résultats du comptage à des sommes de comptage de changement de signaux vidéo connues pour ces images ou obtenues à partir de ces images, un signal d'erreur étant positionné en cas d'écart inadmissible.

2. Procédé suivant la revendication 1, caractérisé en ce que l'on déclenche les opérations de comptage pendant des laps de temps maximaux prescrits.

3. Procédé suivant l'une des revendications 1 et 2, caractérisé en ce que l'on arrête d'exploiter, lors du positionnement du signal d'erreur, les images pouvant être générées par les commandes des appareils de visualisation au moins pour des utilisations de sécurité.

4. Dispositif destiné à mettre en oeuvre le procédé suivant la revendication 1 ou les revendications 1 à 3, caractérisé en ce que
la commande de l'appareil de visualisation est connectée en entrée à un ordinateur de sécurité, qui tient à disposition les données pour les images d'un écran de contrôle à connecter en sortie à la commande d'appareil de visualisation,
il est prévu un circuit de comptage, qui peut être activé par l'ordinateur de sécurité ou par la commande d'appareil de visualisation, qui est destiné à compter les changements de signaux vidéo d'images sélectionnées, qui envoie le résultat de comptage qu'il a déterminé à l'ordinateur de sécurité pour la comparaison à une somme de comptage de consigne et
l'ordinateur de sécurité positionne le signal d'erreur lorsqu'il est constaté un écart inadmissible.

5. Dispositif destiné à mettre en oeuvre le procédé suivant la revendication 1 ou les revendications 1 à 3, caractérisé en ce que,
il est prévu deux commandes (2.1, 2.2) d'appareil de visualisation, qui sont connectées en entrée à un ordinateur (3) de sécurité, lequel tient à disposition les données pour les images d'un écran (1) de contrôle à connecter en sortie à au moins une commande (2.1) d'appareil de visualisation,
il est prévu deux circuits (4.1, 4.2) de comptage pouvant être activés par l'ordinateur de sécurité ou par les commandes d'appareil de visualisation et destinés à compter séparément les changements de signaux vidéo dans les signaux de sortie des deux commandes d'appareil de visualisation,
l'ordinateur de sécurité compare la concordance des résultats de comptage des deux circuits de comptage et positionne le signal d'erreur lorsqu'un écart inadmissible est constaté.

6. Dispositif suivant la revendication 4 ou 5, caractérisé en ce que l'ordinateur (3) de sécurité envoie à la commande (2 ; 2.1, 2.2) d'appareil de visualisation les données pour la génération d'au moins une image de test sélectionnée.

7. Dispositif suivant la revendication 4 ou 5, caractérisé en ce que les données pour la génération d'au moins une image de test sont enregistrées dans la commande (2 ; 2.1, 2.2) d'appareil de visualisation et l'ordinateur (3) de sécurité relit, à des fins de vérification, les données enregistrées dans la commande d'appareil de visualisation pendant des laps de temps maximaux prescrits, les compare aux données connues de lui pour cette image de test et positionne, lorsqu'un écart inadmissible est constaté, le signal d'erreur.

8. Dispositif suivant la revendication 4, 5 ou 6, caractérisé en ce que des images de processus instantanées, représentées sur l'écran (1) de contrôle et associées à un processus à commander ou à contrôler sont utilisées comme images de test.

9. Dispositif suivant la revendication 4 ou 5, caractérisé en ce que le circuit (4 ; 4.1., 4.2) de comptage est constitué d'un certain nombre de compteurs, qui sont destinés à compter de manière séparée des signaux RVB et éventuellement des intensités différentes de ces signaux et en aval desquels est branchée une mémoire intermédiaire destinée à mémoriser temporairement les sommes de comptage déterminées.

10. Dispositif suivant la revendication 9, caractérisé en ce que des convertisseurs de signaux analogiques RVB en niveaux numériques sont branchés en amont des compteurs.

11. Dispositif suivant l'une des revendications 4 à 8, caractérisé en ce que les commandes (2 ; 2.1, 2.2) d'appareil de visualisation sont sous la forme d'ordinateur personnel à cartes vidéo associées.
